# EUROPEAN PATENT APPLICATION

(11) **EP 1 413 602 A1**
(43) Date of publication of application: **28.04.2004**
(21) Application number: 02751631.9
(22) Date of filing: 18.07.2002
(51) Int. Cl.: C08L 25/04, G02B 1/04

(54) **RESIN COMPOSITION FOR OPTICAL PART AND OPTICAL PART**

(30) Priority: 30.07.2001 JP 2001228978
(71) Applicant: IDEMITSU PETROCHEMICAL CO., LTD., Tokyo 130-0015 (JP)
(72) Inventor: OKUYAMA, Kazuhiro, Ichihara-shi, Chiba 299-0107 (JP)
(74) Representative: Prop, Gerrit
(86) International application number: PCT/JP2002/007299
(87) International publication number: WO 2003/011965

(57) **Abstract**

A resin composition for an optical part contains 30 to 70 vol% of (A) a syndiotactic polystyrene resin component or a resin composition component containing a syndiotactic polystyrene resin and a polyphenylene sulfide resin and (B) 70 to 30 vol% of an inorganic filler component, and an optical part is a molded product thereof and causes little shift in optical axis by a change in temperature.

## Description

### Technical Field

The present invention relates to a resin composition for an optical part and an optical part. More specifically, it relates to a resin composition for an optical part, which is suitable as a molding material for housings for optical systems such as an optical pickup device and an optical part that is a molded product thereof and which causes little deviation in optical axis.

### Technical Background

In an optical pickup device for irradiation with a light beam for writing and reading information on a record surface of an optical disk such as a compact disk or a digital versatile disk, a laser printer or a copying machine, particularly a high-speed copying machine, conventionally, housings for optical systems are produced by metal die casting of aluminum or zinc. Meanwhile, in recent years, it is increasingly demanded to decrease the weight of these machines and equipment, so that conversions to products made of synthetic resins are under study. For example, JP-A-10-293940 proposes a holder for an optical pickup device, which holder is formed, as a molding material, of a resin composition comprising polyarylene sulfide and an inorganic filler and having a high thermal conductivity, so that the holder is excellent in heat resistance, dimensional stability, etc., and can suppress a shift in optical axis.

However, the recording capacity of the above optical disk has increased, and it has come to be needed to use the optical disk for recording in a writable compact disk-recordable (CD-R), a compact disk-rewritable (CD-RW), a digital versatile disk-random access memory (DVD-RAM), etc., so that it comes to be required to increase the recording density and at the same time increase the output of an irradiation laser. There are therefore many cases where the optical pickup device is used at a high temperature, for example, a temperature of 50°C or higher, particularly 70°C or higher. At the above high temperatures, an optical system housing formed of the conventional polyarylene sulfide resin composition has a problem that such a housing hinders writing and reading in an optical disk since the housing causes a large shift in optical axis due to a change in temperature. It has been therefore desired to develop a molding material capable of suppressing an increasing shift in optical axis in the optical system in a higher temperature range than a conventional one, for example, in a temperature range of 70 to 110°C, as a molding material for the optical system housing for an optical pickup device, and an optical part that is a molded product thereof.

It is an object of the present invention to provide a resin composition highly useful as a molding material for an optical part that causes little shift in optical axis in an optical system by a change in temperature and an optical part that is a molded product of the above molding material.

### Disclosure of the Invention

For achieving the above object, the present inventor has made diligent studies and as a result has found that the above object can be effectively achieved by decreasing the anisotropy of linear expansion coefficient of a resin composition for an optical part. On the basis of this finding, the present invention has been completed.

That is, the subject matters of the present invention are as follows.
[1] A resin composition for an optical part, comprising 30 to 70 vol% of (A) a resin component containing (a1) a syndiotactic polystyrene resin and 70 to 30 vol% of (B) an inorganic filler component.
[2] A resin composition for an optical part as recited in the above [1], wherein the (a1) syndiotactic polystyrene resin is a syndiotactic polystyrene resin having a weight average molecular weight of at least 50,000 and having a melting peak temperature of 275°C or lower during temperature-increasing at a rate of 20°C/minute in a differential scanning calorimeter.
[3] A resin composition for an optical part as recited in the above [1] or [2], wherein the (A) resin component is a resin composition containing 60 to 97 vol% of the (a1) syndiotactic polystyrene resin and 40 to 3 vol% of (a2) a polyphenylene sulfide resin.
[4] A resin composition for an optical part as recited in any one of the above [1] to [3], wherein the (B) inorganic filler component is a mixture of 5 to 30 vol% of (b1) a fibrous inorganic filler and 95 to 70 vol% of (b2) a non-fibrous inorganic filler.
[5] An optical part that is a molded product of the resin composition for an optical part recited in any one of the above [1] to [4].
[6] The optical part as recited in the above [5], which is a housing for an optical system of an optical pickup device, a laser printer or a copying machine.

### Brief Description of Drawings

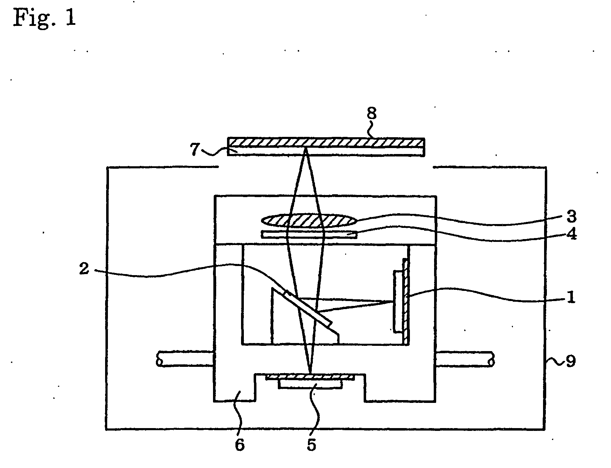

Fig. 1 is a schematic side cross-sectional view of an optical pickup device to which an optical pickup base formed in Example is fixed.

### Best Modes of the Invention

The resin composition for an optical part, provided by the present invention, is a resin composition comprising 30 to 70 vol% of (A) a resin component containing (a1) a syndiotactic polystyrene resin and (B) 70 to 30 vol% of an inorganic filler component. In the resin composition for an optical part, the (A) resin component may be a resin composition containing 60 to 97 vol% of (a1) a syndiotactic polystyrene resin and 40 to 3 vol% of (a2) a polyphenylele sulfide resin. The (a1) syndiotactic polystyrene resin, the (a2) polyphenyelene sulfide resin, the (b1) fibrous inorganic filler and the (b2) non-fibrous inorganic filler will be explained in detail below.

### (a1) Syndiotactic polystyrene resin

The (a1) syndiotactic polystyrene resin for use in the (A) component in the resin composition for an optical part, provided by the present invention, refers to a polystyrene resin having a polymer chain whose steric structure is a syndiotactic structure, that is, a streric structure in which phenyl groups as side chains are positioned on a main chain formed of carbon-carbon bonds so that the phenyl groups are alternately present in the opposite directions. The tacticity of the above syndiotactic polystyrene resin is determined by a nuclear magnetic resonance method based on isotope carbon [¹³C-NMR]. The tacticity measured by the above ¹³C-NMR method can be represented by a proportion of a plurality of continuous constituent units that are present, for example, diad in the case of 2 units, triad in the case of 3 units and pentad in the case of 5 units. As the (a1) syndiotactic polystyrene resin for use in the (A) component in the present invention, a styrene polymer or copolymer having the syndiotacticity represented by at least 75% of racemidiad, preferably at least 85% thereof or by at least 30% of racemipentad, preferably at least 50% thereof is preferably used.

The above styrene polymer or copolymer is selected, for example, from polystyrene, poly(alkylstyrene), poly(halogenated styrene), poly(halogenated alkylstyrene), poly(alkoxystyrene), poly(vinylbenzoate), hydrogenation products of these, mixtures of these or copolymers formed from these as main components. Specific examples of the poly(alkylstyrene) include poly(methylstyrene), poly(ethylstyrene), poly(isopropylstyrene), poly(tert-butylstyrene), poly(phenylstyrene), poly(vinylnaphthalene) and poly(vinylstyrene). Further, the poly(halogenated styrene) includes poly(chlorostyrene), poly(bromostyrene) and poly(fluorostyrene). Further, the poly(halogenated alkylstyrene) includes poly(chloromethylstyrene), and the poly(alkoxystyrene) includes poly(methoxystyrene) and poly(ethoxystyrene). Of these, polystyrene, poly(p-methylstyrene), poly(m-methylstyrene), poly(p-tert-butylstyrene), poly(p-chlorostyrene), poly(m-chlorostyrene), poly(p-fluorostyrene), hydrogenated polystyrene and copolymers containing these structural units are particularly preferred as the styrene polymer.

Concerning the method of preparing the above (a1) syndiotactic polystyrene resin, the syndiotactic polystyrene can be prepared by a method described in JP-A-62-187708, that is, a method in which a styrene monomer is polymerized in an inert hydrocarbon solvent or in the absence of any solvent and in the presence of a titanium compound and a condensation product of water and trialkylaluminum as catalysts. Further, the poly(halogenated alkylstyrene) and the hydrogenated product thereof can be prepared, for example, according to methods described in JP-A-1-46912 and JP-A-1-178505.

The (a1) syndiotactic polystyrene resin as a component in the resin composition for an optical part, provided by the present invention, is preferably selected from those having a weight average molecular weight of at least 50,000 and having a melting peak temperature of 275°C or lower during temperature-increasing at a rate of 20°C/minute in a differential scanning calorimeter. The above weight average molecular weight is a value obtained by measurement according to a gel permeation method using trichlorobenzene as a solvent at 135°C. When a syndiotactic polystyrene resin having a weight average molecular weight of less than 50,000 is used as the (a1) component, an obtained resin composition for an optical part is sometimes insufficient in thermal properties and mechanical properties. The weight average molecular weight of the syndiotactic polystyrene resin for use as the (a1) component is preferably at least 100,000, more preferably at least 200,000.

### (a2) Polyphenylene sulfide resin

The (a2) polyphenylene sulfide resin in the resin composition for an optical part, provided by the present invention, is preferably a polyphenylene sulfide resin containing p-phenylene sulfide units as a basic recurring unit. Further, together with the above p-phenylene sulfide unit, the (a2) phenylene sulfide resin may contain recurring units such as an m-phenylene sulfide unit, an o-phenylene sulfide unit, a p,p'-diphenylene ketone-sulfide unit, a p,p'-diphenylene sulfone-sulfide unit, a p,p'-biphenylene-sulfide unit, a p,p'-diphenylene ether-sulfide unit, a p,p'-diphenylene methylene-sulfide unit, a p,p'-diphenylene cumenyl-sulfide unit and various naphthyl-sulfide units.

As the above (a2) polyphenylene sulfide resin, there can be used a polyphenylene sulfide resin prepared by a general method in which a dihalogeno aromatic compound and a sulfur source are reacted in condensation polymerization in an organic polar solvent. The form of the above polymer chain may be a substantially linear form having none of a branched structure and a crosslinked structure, or may be a form into which a branched structure or a crosslinked structure is introduced by adding a small amount of a monomer having 3 or more functional groups during the production thereof.

The (a2) polyphenylene sulfide resin can be selected from those having various chemical structures as described above. When those having various chemical structures are used, it is preferred to use a polyphenylene sulfide resin having a melt viscosity of 50 to 10,000 poise at a shear rate of 1,000 sec⁻¹ when the resin has a temperature of 300°C. That is, when the melt viscosity is less than 50 poise, the resin composition has low mechanical strength. When the melt viscosity exceeds 10,000 poise, the flowability of the resin composition containing such a polyphenylene sulfide resin as the (a2) component is caused to decrease during molding. Therefore, the dimensional accuracy of an obtained molded article is low, which results in a large shift in the optical axis in an optical system. The melt viscosity of the above (a2) polyphenylene sulfide resin is more preferably 50 to 3,000 poise.

### (b1) Fibrous inorganic filler

In the resin composition for an optical part, provided by the present invention, examples of the fibrous inorganic filler include a glass fiber, a carbon fiber, an alumina fiber, a silicon carbide fiber, a ceramic fiber, a potassium titanate whisker, a zinc oxide whisker and a calcium carbonate whisker. Of these (b1) fibrous inorganic fillers, a glass fiber, a carbon fiber and a zinc oxide whisker are particularly preferred. The (b1) fibrous inorganic filler may have the form of any one of cloth, mat, a bundle of cut fibers, a short fiber, a filament, a whisker, and the like. The (b1) fibrous inorganic filler preferably has a fiber diameter of 5 to 20 µm. The (b1) fibrous inorganic filler having the form of a bundle of cut fibers preferably has a fiber length of 0.05 to 50 mm.

The above (b1) fibrous inorganic filler is preferably surface-treated for improving the adhesion to the above (a1) component and the above (a2) component. As a surface-treating agent for use in this case, a generally used coupling agent is preferably used. The surface-treating agent is preferably selected from silane coupling agents like aminosilanes and epoxysilanes such as γ-aminopropyltrimethoxysilane, N-β-(aminoethy)-γ-aminopropyltrimethoxysilane, γ-glycidoxypropyltrimethoxysilane and β-(3,4-epoxycyclohexyl)ethyltrimethoxysilane, and titanium coupling agents such as isopropyltri(N-amidoethyl) titanate and isopropyltri(aminoethyl) titanate. Further, as a film former, a generally used urethane-containing, epoxy-containing or polyether-containing film former can be used.

### (b2) Non-fibrous inorganic filler

In the resin composition for an optical part, provided by the present invention, examples of the (b2) non-fibrous inorganic filler include talc, carbon black, graphite, titanium dioxide, silica, mica, calcium carbonate, calcium sulfate, barium carbonate, barium sulfate, magnesium carbonate, magnesium sulfate, oxysulfate, tin oxide, alumina, kaolin, silicon carbide, a metal powder, a glass powder, glass flakes and glass beads. The (b2) non-fibrous inorganic fiber may have the form of particles or a powder, and particles or a powder having a diameter in the range of 0.5 to 100 µm are preferably used. Like the (b1) fibrous inorganic filler, the (b2) non-fibrous inorganic filler is preferably surface-treated with the above surface treating agent or the above film former.

Concerning the amount ratio of the components for the resin composition for an optical part, the volume percentage of the (A) component based on the entire resin composition is 30 to 70 vol%, and the volume percentage of the (B) component based on the entire resin composition is 70 to 30 vol%. The reason therefor is as follows. When the volume percentage of the (A) component based on the entire resin composition is less than 30 vol%, the flowability of the resin composition decreases, and the injection molding thereof is impaired. When the volume percentage of the (A) component based on the entire resin composition exceeds 70 vol%, the shift in the optical axis in an optical part obtained by molding the resin composition is large. The compositional ratio of these (A) component and (B) component in the present invention is defined on the basis of volume percentages, since the ratio of these two components and the shift in the optical axis in an optical part obtained by molding the above resin composition for an optical part have a high correlation not to the mass ratio of these two components but to the volume ratio thereof. The above volume percentages represent values calculated by dividing the masses of the (A) component and the (B) component by densities of the components at 25°C under atmospheric pressure. Concerning the amount ratio of these components, further, the volume percentage of the (A) component based on the entire resin composition is arranged to be 30 to 50 vol%, and the volume percentage of the (B) component based on the entire resin composition is arranged to be 70 to 50 vol%, whereby there can be obtained a resin composition for an optical part, which has superior physical properties.

When a resin composition containing 60 to 97 vol% of the (a1) syndiotactic polystyrene resin and 40 to 3 vol% of the (a2) polyphenylene sulfide resin is used as the (A) component in the present invention, and when the amount ratio of the polyphenylene sulfide resin as the (a2) component relative to the (a1) component as a main component is less than 3 vol%, the improvement in mechanical strength, which is an effect produced by adding the (a2) component, is not sufficient. Further, when the amount ratio of the (a2) component exceeds 40 vol%, the shift in the optical axis in an optical part obtained by molding the resin composition for an optical part come to be large when the optical part is used at a high temperature, for example, at a temperature of over 80°C.

Further, as the (B) component in the present invention, the (b1) fibrous inorganic filler or the (b2) non-fibrous inorganic filler may be used alone. However, when these two components are used in the form of a mixture containing 5 to 30 vol% of the (b1) fibrous inorganic filler and 95 to 70 vol% of the (b2) non-fibrous inorganic filler, there can be obtained a resin composition for an optical part, which has superior physical properties. In the resin composition for an optical part, provided by the present invention, it is preferred to use (b1) fibrous inorganic filler and the (b2) non-fibrous inorganic filler in combination. In this case, the amount ratio of the (b1) component and the (b2) component is determined to be in the above range for the following reasons. When the amount ratio of the (b1) component is less than 5 vol% based on the entire (B) component, there are some cases where a resin composition having sufficiently high mechanical strength as a resin composition for an optical part cannot be obtained. Further, when the amount ratio of the (b1) component exceeds 30 vol% based on the entire (B) component, the shift in the optical axis in an optical part obtained by molding the resin composition for an optical part is large.

The resin composition for an optical part, provided by the present invention, contains the above (A) component and the above (B) component as basic components. For improving the affinity of the resin component as the (A) component and the inorganic filler component as the (B) component so that the adhesion strength between these two components is improved, it is preferred to incorporate a polymer having a polar group. The content of the above polymer based on the amount of the (A) component is 0.1 to 10 mass%, preferably 0.5 to 8 mass%, more preferably 1 to 5 mass%. The reason therefor is that when the content of the polymer is less than 0.1 mass%, the adhesion between the (A) component and the (B) component may be sometimes insufficient and that when it is within 10 mass%, the adhesion between the two components can be fully improved.

Examples of the polymer having a polar group suitable for improving the affinity to the inorganic filler component include polymers having polar groups such as an acid anhydride group, a carboxyl group, a carboxylic ester group, a carboxylic acid chloride group, a carboxylic acid amide group, a carboxylic acid salt group, a sulfonic acid group, a sulfonic ester group, a sulfonic acid chloride group, a sulfonic acid amide group, a sulfonic acid salt group, an epoxy group, an amino group, an imide group, an oxazoline group, and the like. The above polymer preferably has a main chain, a block structural unit or a grafted chain containing a structural unit such as atactic polystyrene, isotactic polystyrene, a styrene-based copolymer, polyphenylene ether or polyvinyl methyl ether.

The polymer for improving the affinity to the inorganic filler component can be obtained by reacting the above polymer, for example, with maleic acid, anhydrous maleic acid, and a maleic acid derivative such as maleic ester, maleimide, N-substituted maleimide or maleic acid salt; a fumaric acid derivative such as fumaric acid, fumaric ester or fumaric acid salt; anhydrous itaconic acid, itaconic acid, and an itaconic acid derivative such as itaconic ester or itaconic acid salt; acrylic acid, and an acrylic acid derivative such as acrylic ester, acrylic acid amide or acrylic acid salt; or methacrylic acid, and a metharcrylic acid derivative such as methacrylic ester, methacrylic acid amide, methacrylic acid salt or glycidyl methacrylate. Of these compounds, anhydrous maleic acid, fumaric acid and glycidyl methacrylate are particularly preferred. The above reaction can be carried out, for example, by a method in which the above materials are reacted while melt-kneading them in a roll mill, a Banbury mixer or an extruder at a temperature of 150 to 350°C or a method in which the reaction is carried out in a solvent such as benzene, toluene or xylene under heat. For easily promoting the above reaction, further, it is effective to allow a radical-generating agent such as benzoyl peroxide, di-tert-butyl peroxide, dicumyl peroxide, tert-butyl peroxybenzoate, azobisisobutyronitrile, azobisisovaleronitrile or 2,3-diphenyl-2,3-dimethylbutane to be present in the above reaction system.

Specific examples of the above polymer for improving the affinity to the inorganic filler component include a styrene-maleic anhydride copolymer, a styrene-glycidyl methacrylate copolymer, modified polystyrenes such as terminal-carboxylic-acid-modified polystyrene, terminal-epoxy-modified polystyrene, terminal-oxazoline-modified polystyrene, terminal-amine-modified polystyrene, sulfonated polystyrene, a styrene-based ionomer, a styrene-methyl methacrylate graft copolymer, a (styrene-glycidyl methacrylate)-methyl methacrylate graft copolymer, an acid-modified acryl-styrene graft copolymer, a (styrene-glycidyl methacrylate)-styrene graft copolymer, a polybutylene terephthalate-polystyrene graft copolymer, maleic-anhydride-modified polystyrene, fumaric-acid-modified polystyrene, glycidyl-methacrylate-modified polystyrene and amine-modified polystyrene, a (styrene-maleic anhydride)-polyphenylene ether graft copolymer, and modified polyphenylene ethers such as maleic-anhydride-modified polyphenylene ether, fumaric-acid-modified polyphenylene ether, glycidyl-methacrylate-modified polyphenylene ether and amine-modified polyphenylene ether. Of these, modified polystyrenes and modified polyphenylene ethers are preferred. The content of the polar group in each of the above copolymers or modified-polymers is 0.01 to 20 mass%, preferably 0.05 to 10 mass%. When the content of the above polar group is less than 0.01 mass%, the adhesion to the inorganic filler as the (B) component decreases, and when a large amount of the polymer having a polar group is added for improving the adhesion, the resin composition is caused to be poor in the mechanical properties, thermal properties and moldability. When the content of the above polar group exceeds 20 mass%, the compatibility with the (A) component is caused to decrease.

In addition to the above components, the resin composition for an optical part, provided by the present invention, may contain, as additives, generally employed amounts of a mold release agent, a lubricant, a crystallization nucleating agent, a plasticizer, an antioxidant, an elastomer, a colorant, a flame retardant, etc., which are generally used in synthetic resins. The mold release agent preferably includes polyethylene wax, silicone oil, a long-chain carboxylic acid and a long-chain carboxylic acid metal salt. The crystallization nucleating agent preferably includes carboxylic acid metal salts such as aluminum di(p-tert-butyl benzoate), phosphoric acid metal salts such as sodium methylene bis(2,4-di-tert-butylphenol) acid phosphate, talc and a phthalocyanine derivative. The plasticizer includes polyethylene glycol, a polyamide oligomer, ethylenebisstearoamide, phthalic ester, a polystyrene oligomer, polyethylene wax, mineral oil and silicone oil. Further, the antioxidant includes phosphorus-containing, phenol-containing and sulfur-containing antioxidants.

When the resin composition for an optical part, provided by the present invention, is produced, the above (A) component, the above (B) component and the above additive(s) are fed to a mixer or a kneading machine generally used for mixing or melt-kneading a resin, and they are melt-kneaded, whereby a homogeneous resin composition can be obtained. Further, concerning the method for molding an obtained resin composition to form an optical part, the resin composition can be molded by any one of known injection molding, extrusion molding, solvent molding, press molding and hot molding methods, or the like. Of these molding methods, injection molding is preferred since it is excellent in productivity and dimensional accuracy of a molded product.

The optical part of the present invention obtained by the above molding includes an optical system housing of an optical pickup used for writing and reading information on a record surface of CD, CD-R, CD-ROM, CD-RW, DVD, DVD-R, DVD-ROM or DVD-RAM, and an optical system housing and a chassis of a laser printer or a copying machine. The above optical system housing includes a part for housing or holding a member part like an optical pickup base and a holder of an optical pickup device. The optical part of the present invention is formed of the above resin composition, so that the shift in the optical axis of a laser can be controlled to be in a tolerable range even in a case where a high ambient temperature over a conventional one, for example, an ambient temperature of over 80°C is required.

### Examples

The present invention will be further specifically explained with reference to Examples hereinafter, while the present invention shall not be limited by these Examples.

### Examples 1 - 2 and Comparative Examples 1 - 2

### [1] Materials used as components

### (A) Components

(a1) Syndiotactic polystyrene (130ZC, supplied by Idemitsu Petrochemical Co., Ltd.)
   1) Melt index (300°C, 11.77N): 13 g/10 minutes
   2) Weight average molecular weight: 300,000
   3) Molecular distribution: 2.5
   4) Melting peak temperature: 271°C
   5) Glass transition temperature: 99°C
   6) Density (25°C, atmospheric pressure): 1.04
(a2) Polyphenylene sulfide (#160, supplied by Tosoh Corporation)

1) Crosslinked type
2) Melt viscosity (300°C, 1,000 sec⁻¹) : 1,500 poise
3) Density (25°C, atmospheric pressure): 1.35

### (B) Components

(b1) Glass fiber (JAFT591, supplied by Asahi Fiber Glass K.K.)
   1) Fiber diameter: 10 µm
   2) Density (25°C, atmospheric pressure): 2.55
(b2) Calcium carbonate (Whiton P30, supplied by Shiraishi Kogyo K.K.)
   1) Density (25°C, atmospheric pressure): 2.75

### [2] Preparation of resin composition for optical part

Components shown in the above [1] were used in an amount ratio (mass ratio) shown in Table 1. As a polymer for improving the affinity to the inorganic filler component, a fumaric-acid-modified polyphenylene ether was added in an amount of 2.0 mass% based on the (a1) component, a crystallization nucleating agent (NA-35, supplied by Asahi Denka Kogyo K.K.) was added in an amount of 0.5 mass% based on the (a1) component, and as an antioxidant, a phenol-based antioxidant (Irganox 1010, supplied by Ciba-Specialty Chemicals K.K.) was added in an amount of 0.2 mass% based on the (a1) component. These materials were dry-blended and then melt-kneaded in a twin-screw extruder [TEM35, supplied by Toshiba Machine Co., Ltd.] at 300°C, to give pellets of a resin composition for an optical part.

In each of the thus-obtained resin compositions for an optical part, the volume percentage of the (A) component based on the entire resin composition was calculated on the basis of densities and amount ratio of the above components as raw materials, and the results were as shown in Table 1.

### [3] Production of optical part

The pellets of the resin composition for an optical part, obtained in the above [2], were molded with a 50-ton injection molding machine [supplied by Hitachi Seikosho K.K.] as a molding machine at its mold temperature of 150°C at an injection molding temperature of 300°C, to form an optical pickup base for a digital versatile disk.

### [4] Evaluation of optical part

### (1) Evaluation of moldability (dimensional accuracy)

The optical pickup base formed in the above [3] was visually observed for a degree of deformation, and the dimensional accuracy thereof was evaluated on the following evaluation standard.
- O:: Almost no deformation is observed.
- X:: Deformation is observed, and fixing of the base to an optical pickup device is difficult.

### (2) Evaluation of mechanical strength

The optical pickup base formed in the above [3] was measured for a flexural strength at a room temperature according to ASTM D790.

### (3) Evaluation of optical axis deviation

The optical pickup base obtained in the above [3] was fixed to an optical pickup device shown in Fig. 1 and evaluated.

In the optical pickup device, a semiconductor laser beam source 1, a half mirror 2, an objective lens 3 and a light-receiving portion 5 are held on an optical pickup base 6 fixed to a holder 9. The optical pickup device has a constitution in which a laser beam outputted from the semiconductor laser beam source 1 is focused on a record surface 8 of an optical disk 7 with the objective lens 3 through the half mirror 2 and a collimator lens 4, and a beam reflected from the record surface 8 is caused to enter the light-receiving portion 5 through the objective lens 3, the collimator lens 4 and the half mirror 2 so as to obtain a data signal and an error signal such as a focus error signal. The optical pickup device has a mechanism in which the positions of the objective lens 3 and the like are adjusted with regard to the error signal. Further, the optical pickup base 6 has a constitution in which the entire surface of the record surface 8 of the optical disk 7 can be irradiated with the laser beam while the optical pickup base 6 moves within the holder 9 in conjunction with a shaft.

In the measurement of a shift (angle) in the optical axis of a digital versatile disk in the above optical pick device, the half mirror 2 surface was horizontally fixed, and the laser beam was irradiated at 23°C to measure a reflection angle thereof. Then, the temperature was increased to 90°C and was maintained for 10 minutes, and the irradiation with the laser beam was again conducted, to measure a reflection angle thereof. A difference between the reflection angle at 90°C and the reflection angle at 23°C was used as a shift in the optical axis (angle, minute). The reflection angles were measured with a measuring apparatus having a non-contact angle-measuring mechanism. The measuring apparatus had a resolving power of 0.08 minute.

### (4) Evaluation of recording on digital versatile disk by using actual machine

A digital versatile disk was set in the optical pickup device in the above (3), the temperature to which the optical pickup device was exposed was set at 90°C, and reading data on a digital versatile disk with a laser beam were evaluated by using an actual machine. The standard for the above evaluation was as follows.
- O:: Accurately readable
- X:: Non-readable

Table 1 shows the evaluation results of the optical parts.

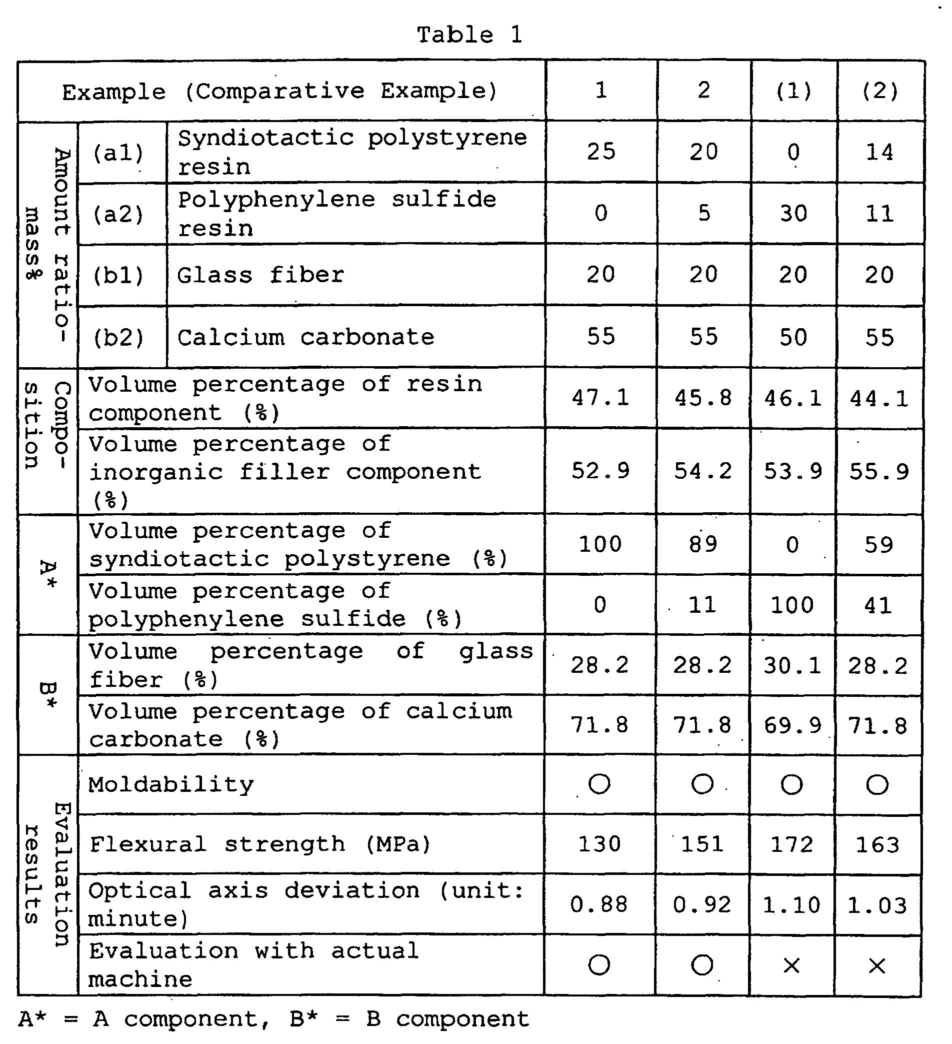

### Industrial Utility

According to the present invention, there can be provided a resin composition highly useful as a molding material for an optical part that causes little shift in optical axis in an optical system by a change in temperature, and an optical part that is formed of the molding material and causes little shift in optical axis.

## Claims

1. A resin composition for an optical part, comprising 30 to 70 vol% of (A) a resin component containing (a1) a syndiotactic polystyrene resin and 70 to 30 vol% of (B) an inorganic filler component.

2. A resin composition for an optical part as recited in claim 1, wherein the (a1) syndiotactic polystyrene resin is a syndiotactic polystyrene resin having a weight average molecular weight of at least 50,000 and having a melting peak temperature of 275°C or lower during temperature-increasing at a rate of 20°C/minute in a differential scanning calorimeter.

3. A resin composition for an optical part as recited in claim 1, wherein the (A) resin component is a resin composition containing 60 to 97 vol% of the (a1) syndiotactic polystyrene resin and 40 to 3 vol% of (a2) a polyphenylene sulfide resin.

4. A resin composition for an optical part as recited in claim 1, wherein the (B) inorganic filler component is a mixture of 5 to 30 vol% of (b1) a fibrous inorganic filler and 95 to 70 vol% of (b2) a non-fibrous inorganic filler.

5. An optical part that is a molded product of the resin composition for an optical part recited in claim 1.

6. The optical part of claim 5, which is a housing for an optical system of an optical pickup device, a laser printer or a copying machine.

7. The optical part of claim 6, which is an optical pickup base.
